# EUROPÄISCHE PATENTANMELDUNG

(11) **EP 0 733 412 A2**
(43) Veröffentlichungstag der Anmeldung: **25.09.1996**
(21) Anmeldenummer: 96102306.6
(22) Anmeldetag: 16.02.1996
(51) Int. Cl.: B09B 3/00, B01J 2/00

(54) **Verfahren zur Verarbeitung und Verwendung von Reststoffen, die bei der Herstellung von Papier anfallen**

(30) Priorität: 23.02.1995 DE 19506249
(71) Anmelder: CODE GmbH COMMERCIAL DEVELOPMENTS, D-40667 Meerbusch (DE)
(72) Erfinder: Osing, Dirk A., 40667 Meerbusch (DE)

(57) **Zusammenfassung**

Die Erfindung betrifft ein Verfahren zur Verarbeitung und Verwendung von feuchten, faserhaltigen Reststoffen, die bei der Herstellung von Zellstoff oder Papier anfallen.

Ihr liegt die Aufgabe zugrunde, ein Verfahren anzugeben, mit dessen Hilfe die in den Reststoffen enthaltenen Wertstoffe wiederverwertet werden können.

Die Aufgabe wird durch folgende Verfahrensschritte gelöst:
- eine vorgegebene Menge der Reststoffe wird in einem Mischer zunächst homogenisiert,
- den homogenisierten Reststoffen wird bezogen auf deren Menge nach und nach die 0,3- bis 5-fache Menge einer staubförmigen, mineralhaltigen Substanz zugefügt und mit den homogenisierten Reststoffen solange vermischt, bis ein rieselfähiges Produkt entsteht, das Korngrößen zwischen 0,5 und 10 mm Durchmesser aufweist.

## Beschreibung

Die Erfindung betrifft ein Verfahren zur Verarbeitung von feuchten, faserhaltigen Reststoffen, die bei der Herstellung von Zellstoff oder Papier anfallen und ein Verhältnis von Feststoff zu Wasser zwischen 20 : 80 und 70 : 30 Prozent aufweisen. Die Erfindung betrifft auch die Verwendung von verarbeiteten Reststoffen dieser Art.

Der Reststoff fällt überwiegend bei der Herstellung von Papier an, welches bekanntlich aus Fasern, Hilfsstoffen und Wasser besteht. Neben Zellstoff werden Holzstoff, Hadern und Altpapier für die Herstellung des Papiers verwendet.

Zum Erzeugen eines Papierbreis sind große Mengen Wasser erforderlich. Aus wirtschaftlichen Gründen wird dieses Wasser im Kreislauf gefahren; das bedeutet, ein- und dasselbe Wasser wird mehrfach verwendet und es werden immer nur die laufenden Verluste durch Frischwasser ersetzt. Beim Im-Kreislauf-Fahren reichen sich das Wasser mit jenen Fasern an, aus denen das Papier jeweils hergestellt wird. Aus diesem Grunde muß das Wasser laufend gefiltert werden. Den anfallenden Filterkuchen, der neben allerfeinsten bis feinen Fasern auch ein breites Spektrum an Mineralien enthält, die von den Hilfsstoffen herstammen, bezeichnet man auch als Spuck- oder Fangstoff. Die darin enthaltenen Fasern weisen Längen auf, die vom Mikrometer- (µm) bis in den Millimeterbereich (mm) reichen können. Nach dem Auspressen weist dieser Reststoff noch Feuchtigkeitsgehalte zwischen 40 und 70 % auf, wobei das Wasser sowohl an die Oberfläche der Fasern als auch in den Fasern selbst kolloidal gebunden ist, wie man das beispielsweise von der Braunkohle her kennt.

Aufgrund der überwiegend organischen Natur der Fasern lag es nahe, den Reststoff als Düngemittel zu verwenden. Das Ausbringen gestaltete sich indes schwierig, denn der faserige Inhalt und die Feuchtigkeit verminderten die für den Aufschluß des Düngemittels vor dem Ausbringen erforderliche Feinzerteilung. Stattdessen konnten nur markstück- bis handtellergroße Fladen und Klumpen ausgetragen werden, die alsbald vom Schimmel befallen wurden und üblen Geruch verbreiteten. Hier brachte auch das vorhergehende Vermischen mit Stücken von Baumrinde und Sägemehl keine wirksame Abhilfe.

Auch das Deponieren der Reststoffe gilt nicht als befriedigend, weil abgesehen von den hohen Kosten die Gefahr besteht, auf diese Weise einen nie austrocknenden üblen Sumpf zu schaffen. Schließlich wurde erwogen, die Reststoffe zu verbrennen; der hohe Wasseranteil, der zunächst unter Aufwand von viel Energie beseitigt werden mußte, bevor der Feststoffanteil zündet, verwies auch diese Absicht sehr schnell in den Bereich der Unwirtschaftlichkeit.

Aus der DE 42 40 807 C1, nachfolgend (1) genannt, ist beispielsweise ein organisch-mineralisches Düngemittel bekannt geworden. Insbesondere ist in (1) von einer "Zusammensetzung" die Rede, die aus Papierschlämmen, Klärschlämmen, Sedimentationsschlämmen, Asche aus der Verbrennung von Klärschlamm und einer Mineraldüngermischung in den jeweils angegebenen Anteilen besteht (vgl. (1), Spalte 1, Zeilen 61 bis 68 und Spalte 2, Zeilen 1 bis 3). Nachdem bekanntermaßen als Papierschlämme alle bei der Reinigung von industriellen Abwässern der Papierherstellung erhaltenen Schlämme in Frage kommen sollen, darf man vernünftigerweise davon ausgehen, daß darunter auch Schlämme sind, die Anteile an Fasern aufweisen (vgl. (1), Spalte 2, Zeilen 6 bis 10), obwohl das expressis verbis nirgendwo in (1) gesagt wird.

Die bekannte Zusammensetzung weist also nicht nur eine einzelne Schlammkomponente auf sondern deren drei. Demgegenüber enthält der anmeldungsgemäße Reststoff wesentliche Anteile an Fasern, die ein Ausbringen als Düngemittel bisher verhinderten, weil die Fasern den Reststoff derart zusammenhalten, daß lediglich markstück- bis handtellergroße Fladen und Klumpen ausgetragen werden können.

Auch RIES, H. B.: "Granulierteller und Mischungsgranulatoren für die Verfestigung industrieller Stäube und Schlämme", in: Sprechsaal, 110. Jahrgang 1971, S. 669-674, nachfolgend (2) genannt, beschränkt sich im wesentlichen darauf, die Vermischbarkeit von Schlämmen und Trockenstoffen aufzuzeigen und die dabei einsetzende Granulation zu beschreiben. Obwohl auch die Behandlung von Klärschlamm in (2) aufgezeigt wird, so fehlt dem Fachmann jeglicher Hinweis darauf, wie er Schlämme zu behandeln hat, die extrem faserhaltig sind, wie eben die Reststoffe aus der Papierherstellung. Aber auch eine denkbar mögliche Kombination der Kenntnisse aus (1) und (2) hätte den Fachmann nicht ohne eigenes erfinderisches Zutun zum Ziele geführt.

Die DE 33 09 255 A1, nachfolgend (3) genannt, offenbart demgegenüber einen neuen Brennstoff, der neben mehreren anderen Komponenten aus 5 bis 30 % Papierbrei bestehen soll. Der bekannte Papierbrei soll aus Papier oder anderen bei der Herstellung eines solchen Breis üblichen Produkten - wie z. B. Stroh oder verschiedene Holzarten - hergestellt sein (vgl. (3), Ziffer 2.2). Diese Definition rückt aber in den Augen des Fachmanns den bekannten Papierbrei in die Reihe jener Rohstoffe, aus denen Papier eigentlich hergestellt wird. Die Verwendung der bei der Papierherstellung anfallenden Reststoffe als Brennstoff wird jedenfalls in (3) nicht angesprochen.

Schließlich beschreibt Anspruch 13 der DE OS 24 61 781, nachfolgend (4) genannt, eine "zur Herstellung von Formgegenständen geeignete Masse, die neben anderem faserhaltiges verstärkendes Material enthält, welches ... organische Fasern enthält, welche nicht unterhalb 140° C schmelzen." Anspruch 14 beschreibt eine daraus hergestellte Bauplatte. In (4) ist sodann weiter ausgeführt: "die organischen Fasern für die Verstärkung sind vorzugsweise Zellulosefasern, und Beispiele von solchen geeigneten zelluloseartigen Fasern sind die aus Zellstoffbrei für die Papierherstellungsverfahren hergestellten Fasern." Damit sind die bekannten Verstärkungsfasern zweifellos in die Nähe jener Reststoffe gerückt, deren Fasern erfindungsgemäß die geformten festen und porösen Baustoffe (Anspruch 13) verstärken sollen. Wie es scheint, handelt es sich bei den bekannten Fasern aber eher um Rohstoffe, wie sie zur Papierherstellung dienen. Das Erfordernis, daß die bekannten Fasern nicht unterhalb von 140° C schmelzen sollen, läßt auch darauf schließen, daß die Fasern als Strukturelemente innerhalb des Baustoffs erhalten bleiben sollen.

Vor diesem Hintergrund ergibt sich die Aufgabe für die vorliegende Erfindung, ein Verfahren vorzuschlagen, mit dessen Hilfe die in den Reststoffen enthaltenen Wertstoffe wiederverwertet werden können. Dabei soll das Behandeln der Reststoffe ohne großen Aufwand an Zeit und Energie erfolgen, d. h. wirtschaftlich sein und zu wertvollen Produkten führen.

Erfindungsgemäß wird diese Aufgabe durch zwei aufeinanderfolgende Verfahrensschritte gelöst, nämlich
- eine vorgegebene Menge der Reststoffe wird in einem Mischer unter ständigem Drehen oder Rühren zunächst homogenisiert,
- den homogenisierten Reststoffen wird, bezogen auf deren Menge, nach und nach die 0,3- bis 5-fache Menge einer staubförmigen mineralhaltigen Substanz beigefügt und mit den homogenisierten Reststoffen unter fortgesetztem Drehen oder Rühren solange vermischt, bis ein rieselfähiges Produkt entsteht, das Korngrößen zwischen 0,5 und 10 mm Durchmesser aufweist.

Das Verfahren läuft chargenweise ab, ist also diskontinuierlich. Mit dem ersten Verfahrensschritt des Homogenisierens werden zunächst die Faserstoffe und Mineralien innerhalb der wässrigen Phase suspendiert. Flocken und Klumpen von Fasern werden feinzerteilt und es entsteht eine schwach basische -pH ≃ 7,5- weißliche graue dicke Flüssigkeit, die nicht wie Schlamm aussieht.

Es handelt sich also bei der erfindungsgemäßen Verarbeitung um einen Reststoff, der überwiegend aus kurzen und langen Fasern besteht. Einen solchen Stoff kann man nicht ohne weiteres mit einer staubförmigen, mineralhaltigen Substanz behandeln, um daraus im Sinne der Aufgabenstellung ein wiederverwertbares, wertvolles Produkt zu machen. Vielmehr ist es erforderlich, unter ständigem Drehen oder Rühren die Flocken und Klumpen von Fasern zunächst fein zu zerteilen, also den Reststoff zu homogenisieren. Der dabei entstehenden, weißlich grauen Flüssigkeit kann anschließend erst die staubförmige mineralhaltige Substanz nach und nach zugefügt werden, um das angestrebte rieselfähige Produkt zu erzeugen, das sowohl lager- und transportierbar und zugleich auch blasbar ist. Wie die Erfahrung im Umgang mit den faserhaltigen Reststoffen gezeigt hat, ist jede Abweichung von den angegebenen Verfahrensschritten zum Scheitern verurteilt.

Im zweiten Verfahrensschritt werden die homogenisierten Reststoffe mit Hilfe einer staubförmigen, mineralhaltigen Substanz nach und nach eingedickt und in die Form von Granulat oder Pellets überführt. Dabei durchbricht die zugefügte mineralhaltige Substanz zunächst die Neigung der Faserstoffe zur Bildung von Flocken und Klumpen und bindet zugleich den Überschuß an wässriger Phase; d. h. das erhaltene Produkt wird derart trocken, daß es rieselfähig ist.

Bei der Verwendung von erfindungsgemäß bevorzugten mineralischen Substanzen, wie Kohlenstaub, Koksstaub oder Flugasche, wird das erzeugte rieselfähige Produkt zugleich lager- und transportierbar und zumeist auch blasbar. Dieses sind wesentliche Voraussetzungen für ein ökonomisch und ökologisch sinnvolles Erschließen der im Produkt enthaltenen Wertstoffe bei unterschiedlicher Verwendung. Erfindungsgemäß werden als Kohlenstaub Braun- und Steinkohlenstäube bevorzugt verwendet, aber auch die Verwendung von Graphit und mageren Rußen wird in Betracht gezogen. Als Koksstäube werden wiederum die Kokse von Stein- und Braunkohle bevorzugt, wobei aber auch Petrolkoks nicht außer Acht bleibt. Als Flugaschen eignen sich jene, die bei der Verbrennung von Stein- oder Braunkohle am Elektrofilter hinter dem Kraftwerkskessel anfallen. Flugaschen mit Gehalten an Calciumsulfat - CaSO₄ -, wie sie bei der Rauchgasentschwefelung im Kraftwerkskessel selbst anfallen - sogenannte TAV-Aschen -, haben sich ebenfalls als geeignet erwiesen. Das gleiche gilt für Calciumsufatanhydrit, nämlich trockenen Rauchgasgips, wie er bei der Rauchgaswäsche am Kraftwerk anfällt. Der aus dem Schwefel herrührende saure Charakter des Calciumsulfats hat den besonderen Vorteil, daß er dazu geeignet ist, die eingangs erwähnte geringe Basizität der Reststoffe zu neutralisieren. Schließlich kann durch gezielte Mischung von mehreren der vorgenannten Komponenten eine staubförmige, mineralhaltige Substanz erhalten werden, die in der erfindungsgemäßen Verbindung mit den Reststoffen zu Produkten führt, denen eine breite Palette von Anwendungsmöglichkeiten offensteht.

Allen Möglichkeiten voran steht die Verwendung des erfindungsgemäß erzeugten Produktes als Dünger. Da das Ausbringen von Dünger jahreszeitlichen Beschränkungen unterliegt, spielt eine ausreichende Lager- und Transportierbarkeit über längere Zeiträume bzw. Wege eine entscheidende Rolle.

Die Granulat- bis Pelletform und auch die Festigkeit des Produktes gewährleisten diese Eigenschaft. Die Rieselfähigkeit gewährleistet ein problemloses, gleichmäßiges Ausbringen mit üblichen Düngerstreuern, ohne daß die Geräte verstopfen oder verlieben. Einmal ausgebracht, zerfällt das Granulat bzw. die Pellets allmählich unter der Einwirkung der Feuchtigkeit des Bodens, des Sauerstoffs der Luft und des Sonnenlichtes und gibt die organischen und mineralischen Bestandteile, die in den Reststoffen enthalten sind, nach und nach frei, so daß sie von den Pflanzen aufgenommen werden können. Das gemessene Eluierverhalten erhärtet diese Eigenschaft. Üble Gerüche werden nicht freigesetzt. Durch ein gezieltes Verschneiden von Kohlenstäuben und Flugaschen kann das für den jeweiligen Anwendungsfall günstige Düngemittelprodukt erzeugt werden.

Bei einer beabsichtigten Verbrennung des Produktes steht zweifellos der Energieinhalt im Vordergrund. Hierbei werden die Reststoffe bevorzugt mit Kohlenstaub oder Koksstaub vermischt. Dafür kann der Energieaufwand zur Erzeugung des Kohlenstaubs nicht allein ausschlaggebend sein; vielmehr ist auch an die Verwendung von verunreinigten oder sonstigen Stäuben gedacht, wie sie im Veredelungsbetrieb der Kohlen an unterschiedlichen Stellen anfallen und beseitigt werden müssen. Neben einer ausreichenden Lagerbarkeit wird auch die Blasbarkeit des Produktes besonders geschätzt, weil sie dessen Eintrag in den Verbrennungsprozeß sehr erleichtert.

Eine weitergehende Verwendungsmöglichkeit eröffnet sich dem Produkt als Zuschlagstoff zu Baustoffen. Als Granulat wird das Produkt beispielsweise mit unter die jeweiligen Hauptkomponenten gemischt, aus denen Platten oder Steine unter Einwirkung von Wärme erzeugt werden. Bei ausreichender Temperatur verbrennen die Reststoffe in der zu brennenden Masse und erhöhen die Porösität des jeweiligen Baustoffs; die mineralischen Anteile des Produktes verbinden sich dabei mit den übrigen Mineralien des Baustoffs.

Nachfolgend wird die Erfindung an einigen Meßdaten näher veranschaulicht. Beispielsweise zeigt die nachstehende Tabelle I eine Analyse von Reststoffen aus der Papierherstellung. Aus der Tabelle I wird erkennbar, daß ein durch mechanischen Druck bis auf 40 % Wasser vorentwässerter Reststoff einen Anteil an faserigen, organischen Komponenten in der Größenordnung von 31,67 % und einen Anteil an mineralischen Komponenten in der Größenordnung von 28,14 % aufweisen kann.

Die Elementaranalyse zeigt, daß die Gehalte an Eisen (Fe) und Halogenen (Bo) überwiegen und der Gehalt an Schwermetallen Blei, Cadmium und Quecksilber unterhalb von jenen Werten liegen, die nach üblichen Düngemittelbestimmungen landesweit bei der Verwendung des Produktes als Dünger nicht überschritten werden dürfen. Tabelle I

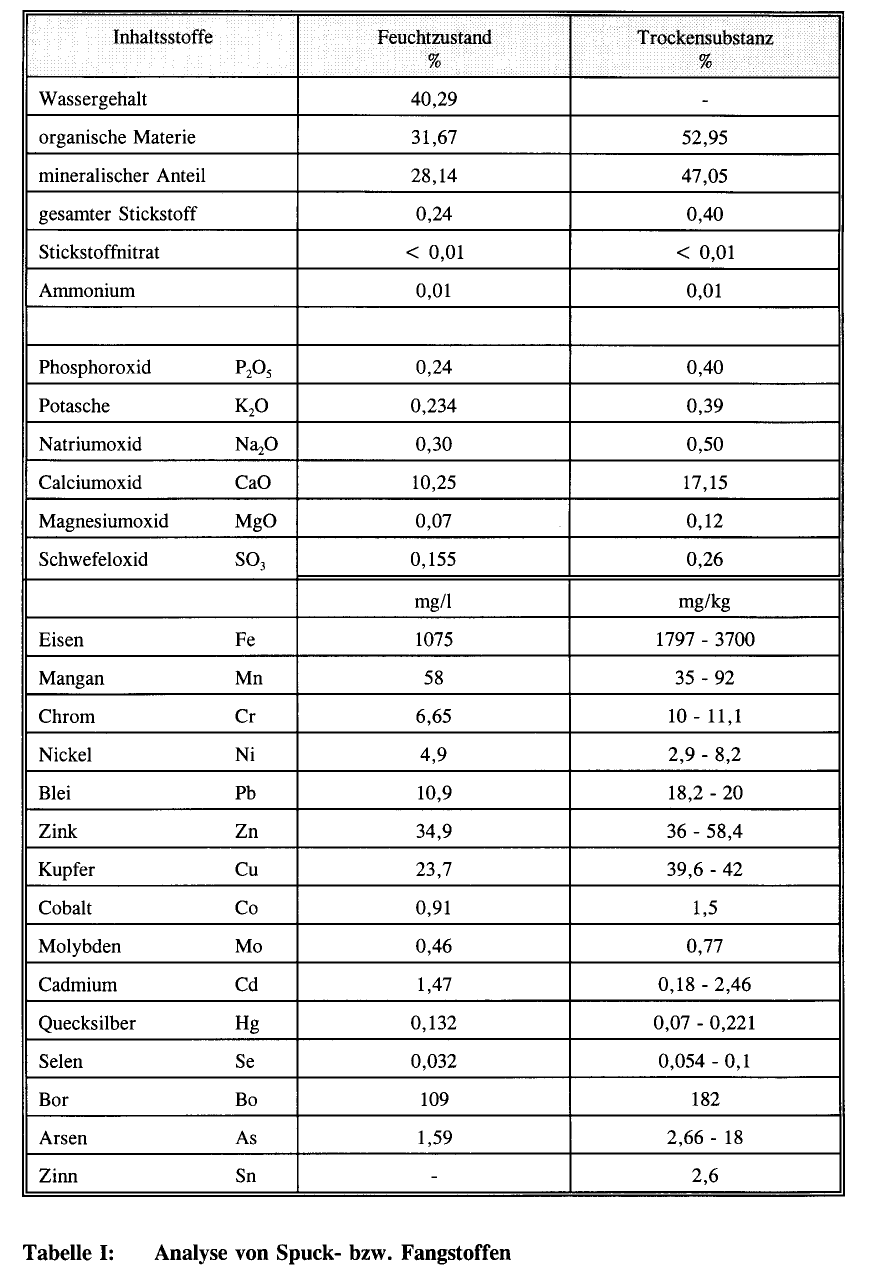

In der Tabelle II sind die mittleren Analysenwerte von Flugasche aus der Verbrennung von Braunkohle mit Schwefeleinbindung - TAV-Asche - dargestellt, wie sie zur Beimischung zu den Reststoffen besonders geeignet ist.

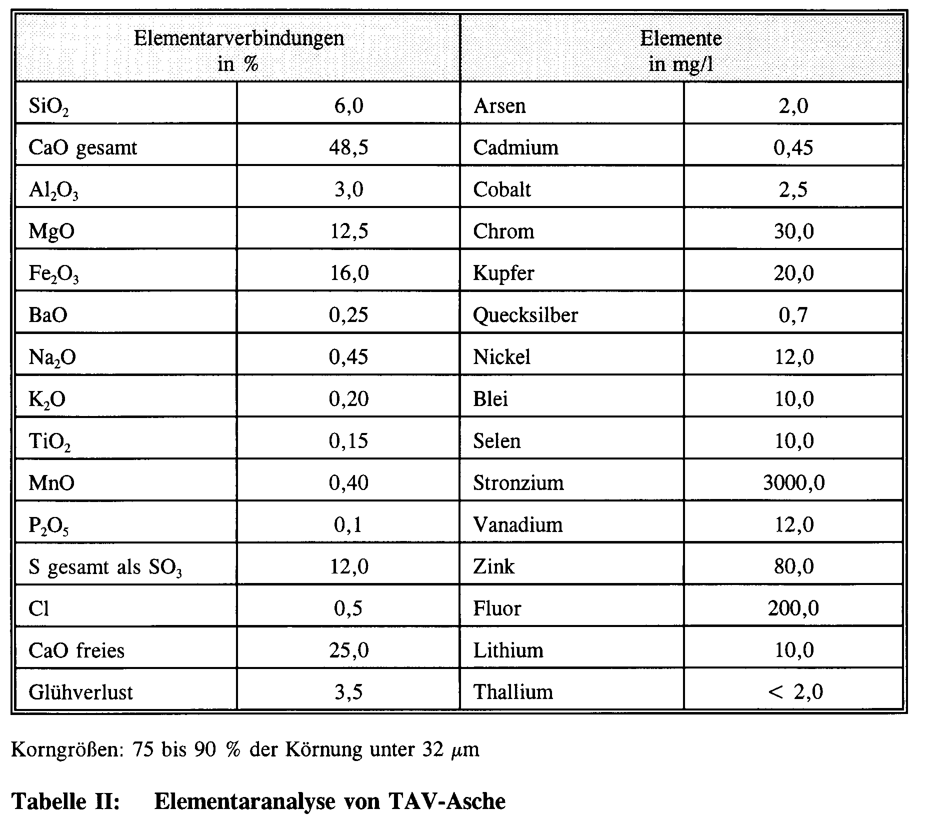

Die geltende Düngemittelverordnung vom 9. Juli 1991, BGBl Teil I, S. 1466, fordert beispielsweise für "Rückstandskalk", worunter die TAV-Asche sinnfälligerweise einzuordnen wäre, für die folgenden Elemente Maximalwerte, die nicht überschritten werden dürfen:

| | |
|---|---|
| Blei | 200 mg/kg |
| Cadmium | 6 mg/kg |
| Nickel | 100 mg/kg |
| Quecksilber | 4 mg/kg |
| Thallium | 2 mg/kg |

Beim Vergleich mit den vorstehenden Analysenwerten wird erkennbar, daß die entsprechenden Gehalte der TAV-Asche unterhalb der gesetzlich zugelassenen Grenzen liegen. Damit dürften gegen das Beimischen von TAV-Asche zu den Reststoffen und das anschließende Ausbringen des Produktes als Düngemittel keine Bedenken bestehen.

In der Tabelle III wird schließlich das Eluierverhalten nach DIN 38414 - 4 betrachtet. Bei diesem Test wurden jeweils 300 g Masse von unbehandelten Reststoffen und Reststoffen, die mit Flugasche vermischt waren, jeweils 24 Std. lang mit jeweils 3 l destilliertem Wasser durchströmt.

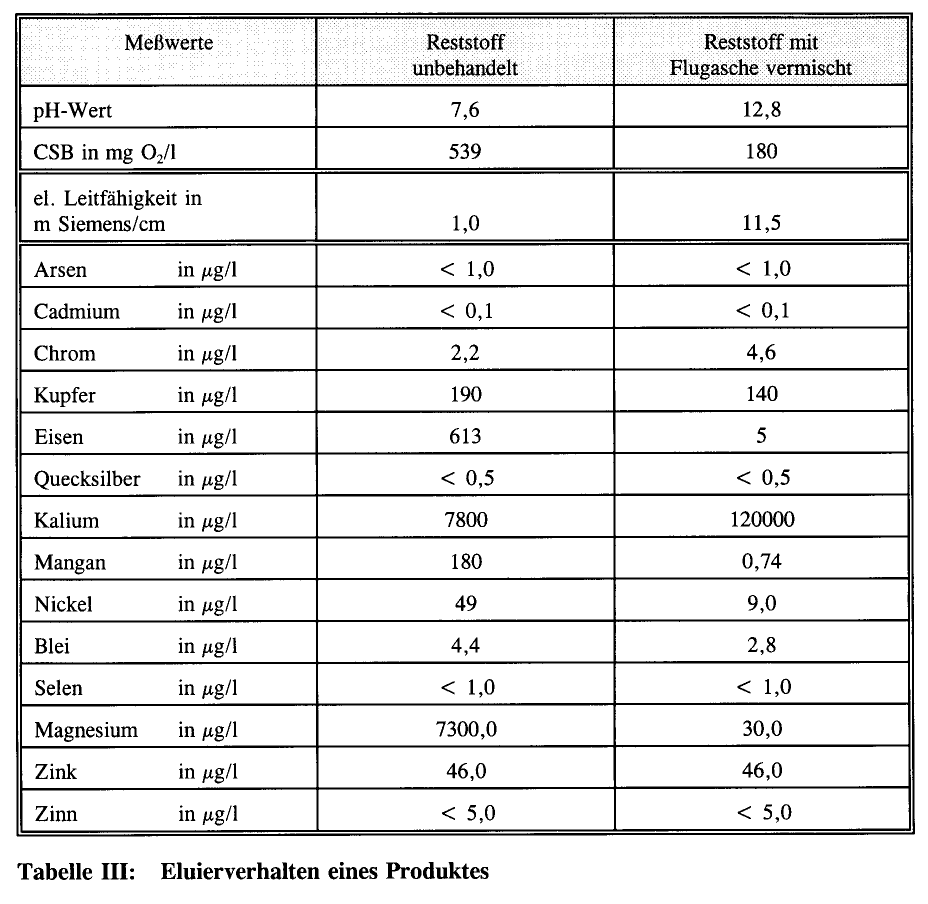

Wie man sieht, stehen auch die Werte der rechten Spalte der Tabelle III zur geltenden Düngemittelverordnung nicht im Gegensatz. Im Hinblick auf den möglichen Einsatz des Produktes als Dünger wird erkennbar, daß ausgesprochene Schadstoffe für Mineralböden, wie Arsen, Cadmium, Chrom, Quecksilber, Nickel und Schwefel, sowohl im Reststoff selbst als auch im Eluat aus dem Produkt, Reststoff und Asche, nur im Spurenbereich vorliegen. Der Reststoff selbst enthält bereits wichtige Nährstoffe wie z. B. Mangan und Kalium. Zu bemerken ist noch, daß beim Vermischen der homogenisierten Reststoffe mit Flugasche nach 2 bis 3 Tagen Lagerung ein Gewichtsverlust zwischen 10 bis 20 % bezogen auf das Gewicht des Produktes unmittelbar nach der Herstellung zu verzeichnen war; der Gewichtsverlust wird dem Schwund des Wassergehaltes (H₂O) zugeschrieben.

Das Verarbeiten des Reststoffes bzw. die Herstellung des Produktes erfolgt mittels üblicher Mischer wie Trommelmischer, bevorzugt Typ Eirich-Mischer, oder Rührwerke mit stehendem Behälter und darin umlaufendem Rührer. Wie eingangs gesagt, erfolgt das Mischen chargenweise, d. h. diskontinuierlich. Im Falle der Erzeugung von zu großen Pellets ist vorgesehen, solche Pellets nach ausreichender Aushärtung abzusieben und ggf. anschließend mechanisch zu zerkleinern. Eine mechanische Zerkleinerung des Produktes bis hin zur Staubform kann aber auch generell in Betracht gezogen werden, sobald das Produkt ausreichend erhärtet ist und der jeweilige Einsatzzweck die Staubform gebietet.

Anstelle von Kohlenstäuben und feinkörnigen Aschen kann auch Branntkalk (CaO) und/ oder feingemahlene Schlacke aus der Hütten- und Stahlwerksindustrie mit den Reststoffen vermischt werden. Ebenso möglich sind Mischungen aus Reststoffen und beliebigen Mischungen der vorgenannten Substanzen. Die Vermischung mit Branntkalk wird besonders dann bevorzugt, wenn es darum geht, üble Gerüche zu vermeiden und das Vermehren von Bakterien einzudämmen oder ganz zu verhindern. Die Vermischung der Reststoffe mit Branutkalk und auch mit Flug- bzw. TAV-Asche hat auch noch einen beachtlichen thermischen Vorteil, indem nämlich die Feuchtigkeit der Reststoffe beim Vermischen mit dem Calciumoxid - CaO - zu einer exothermen Reaktion führt, in deren Verlauf ein Teil der Feuchtigkeit verdampft, was zu einem weitergehenden Abtrocknen des Produktes führt.

Spuckstoffe weisen vielfältige Verunreinigungen auf, die von Metallteilen, Kunststoffen bis zu organischen Beimengungen reichen und kleinere bis größere Stücke umfassen. Üblicherweise werden diese Verunreinigungen am Ort des Anfalls der Spuckstoffe in Form eines Zopfes aus der Spuckstoffbrühe herausgezogen.

Demgegenüber eröffnet die erfindungsgemäße Behandlung der Spuckstoffe mit einer mineralischen Substanz die Möglichkeit, die Verunreinigungen von den Spuckstoffen durch Absieben zu separieren. Spuckstoffe, die bisher überwiegend deponiert werden mußten, haben bereits eine krümelige Konsistenz. Nach der erfindungsgemäßen Behandlung können die Verunreinigungen zu einem bisher nicht gekannten hohen Prozentsatz aus den Spuckstoffen entfernt werden und diese in eine feinkrümelige, nicht klebende oder backende Konsistenz überführt werden, in der sie lager-, transportierbar und für eine mögliche spätere thermische oder landwirtschaftliche Verwertung besonders gut handhabbar sind.

Bei einer möglichen Verwendung des erfindungsgemäßen Produkts als Dünger oder Bodenverbesserer hat es sich als Vorteil erwiesen, dem Produkt begrenzte Mengen an pulverförmigem Magnesit beizumengen. Das Mineral Magnesit, MgCO₃, fördert das Wachstum von Pflanzen, was besonders daran erkennbar ist, daß die Pflanzen eine satte grüne Farbe annehmen.

## Patentansprüche

1. Verfahren zur Verarbeitung von feuchten, faserhaltigen Reststoffen, die bei der Herstellung von Zellstoff oder Papier anfallen und ein Verhältnis von Feststoff zu Wasser zwischen 20:80 und 70:30 Prozent aufweisen, gekennzeichnet durch die folgenden Verfahrensschritte
- eine vorgegebene Menge der Reststoffe wird in einem Mischer unter ständigem Drehen oder Rühren zunächst homogenisiert,
- den homogenisierten Reststoffen wird, bezogen auf deren Menge nach und nach die 0,3- bis 5-fache Menge einer staubförmigen mineralhaltigen Substanz zugefügt und mit den homogenisierten Reststoffen unter fortgesetztem Drehen oder Rühren solange vermischt, bis ein rieselfähiges Produkt entsteht, das Korngrößen zwischen 0,5 und 10 mm Durchmesser aufweist.

2. Verfahren nach Anspruch 1, dadurch gekennzeichnet, daß man die homogenisierten Reststoffe mit Stein- oder Braunkohlenstaub vermischt.

3. Verfahren nach Anspruch 1, dadurch gekennzeichnet, daß man die homogenisierten Reststoffe mit Koksstaub von Stein- oder Braunkohlenkoks vermischt.

4. Verfahren nach Anspruch 1, dadurch gekennzeichnet, daß man die homogenisierten Reststoffe mit Flugasche vermischt, die bei der Verbrennung von kohlenstoffhaltigen Substanzen anfällt.

5. Verfahren nach Anspruch 4, dadurch gekennzeichnet, daß man Flugasche verwendet, die bei der Verbrennung von Stein- oder Braunkohle am Kraftwerkskessel anfällt.

6. Verfahren nach Anspruch 4 oder 5, dadurch gekennzeichnet, daß man Flugasche verwendet, worin Schwefel eingebunden ist, sogenannte TAV-Asche.

7. Verfahren nach Anspruch 1, dadurch gekennzeichnet, daß man die Reststoffe mit Branntkalk (CaO) vermischt.

8. Verfahren nach Anspruch 1, dadurch gekennzeichnet, daß man feingemahlene Schlacken aus dem Hütten- und Stahlwerksbereich mit den Reststoffen vermischt.

9. Verwendung eines nach den Ansprüchen 1 bis 3 und 8 erzeugten Produktes zur Verbrennung im Kraftwerkskessel.

10. Verwendung eines nach den Ansprüchen 1 und 4 bis 8 erzeugten Produktes als Düngemittel in der Land- und/oder Forstwirtschaft.

11. Verwendung eines nach den Ansprüchen 1 bis 8 erzeugten Produktes als Zuschlagstoff für die Herstellung von geformten festen und porösen Baustoffen.

12. Verwendung eines nach den Ansprüchen 1 bis 6 erzeugten Produktes als Zuschlagstoff für die Herstellung von Leichtbausteinen.
